# FASCICULE DE BREVET EUROPEEN

(11) **EP 1 579 637 B1**
(45) Date de publication et mention de la délivrance du brevet: **18.02.2009**
(21) Numéro de dépôt: 03799603.0
(22) Date de dépôt: 29.12.2003
(51) Int. Cl.: H04L 12/413, H04L 12/417

(54) **Méthode pour réserver de la bande passante dans un réseau de type éthernet**
Verfahren zum Reservieren von Bandbreite in einem Netzwerk des Ethernet-Typs
Method for reserving bandwidth in an ethernet-type network

(30) Priorité: 02.01.2003 FR 0300006
(43) Date de publication de la demande: 28.09.2005
(73) Titulaire: Thomson Licensing, 92100 Boulogne-Billancourt (FR)
(72) Inventeur: FLEURY, Jean-François, 19 Dongzhongjie 100027 Beijing (CN); HENRY, Jean-Baptiste, F-35520 Melesse (FR)
(74) Mandataire: Le Dantec, Claude
(86) Numéro de dépôt international: PCT/EP2003/051110
(87) Numéro de publication internationale: WO 2004/066561

(56) Documents cités:
- VENKATRAMANI, CHITRA: "The Design, Implementation and Evaluation of RETHER: A Real Time Ethernet Protocol" , [en ligne] novembre 1996 (1996-11), pages 1-125, XP002254052 Extrait de l'Internet: <URL:http://citeseer.nj.nec.com/venkatrama ni96design.html> [extrait le 2003-09-18]

## Description

L'invention concerne les réseaux de communication de type bus Ethernet et plus particulièrement de tels réseaux dits domestiques.

Il est connu qu'un réseau de communication de type bus Ethemet fonctionne selon le mode CSMA/CD, c'est-à-dire par détection de porteuse avec détection de collision. Certains travaux de recherche ont proposé d'utiliser des mécanismes d'allocation de priorités implémentés dans les paquets Ethemet pour permettre dans ce type de réseau de communication de transmettre des flux de données sur le bus Ethemet. Toutefois, ce type de mécanisme d'allocation de priorités s'adresse plutôt à des réseaux informatiques organisés autour de routeurs. Il n'est pas adapté à des petits réseaux de communication du type réseaux domestiques ou les équipements sont passifs.

Le but de l'invention est de proposer un mécanisme pour réserver à au moins un noeud d'un réseau de communication de type bus Ethemet une certaine fraction de la bande passante du bus de façon à lui permettre de transmettre un flux de données, par exemple un flux audio/vidéo selon la norme DVB (« Digital Video Broadcast »).

L'idée à la base de l'invention est de superposer au protocole de communication d'un bus numérique, un arbitrage d'accès au bus par circulation d'un jeton entre les noeuds du réseau de façon à pouvoir contrôler les temps d'accès en écriture sur le bus par les noeuds du réseau. Le terme jeton désigne un droit d'écriture qui est accordé à un noeud du réseau au sens d'un réseau de type anneau à jeton connu sous le nom anglais de « token ring ». La bande passante est découpée en cycle au cours duquel le droit d'écriture du jeton passe d'un noeud à un autre selon une stratégie déterminée et reproductible sur plusieurs cycles.

Le document « Rether Ethernet protocole » de Chitra VENKATRAMANI publié en novembre 1996, décrit un réseau composé de noeuds ayant un droit d'émettre pendant un intervalle de temps dépendant de la bande passante préalablement réservée. Un noeud de contrôle effectue un découpage temporel de la bande passante en élaborant une première liste de noeuds ayant demandé de la bande passante, et une seconde liste de noeuds n'ayant pas réserver. Au cours d'un cycle, les terminaux de la première liste envoient leurs messages d'abord puis, les terminaux de la seconde liste s'expriment pendant le temps restant. Lorsque la fin de cycle intervient, les émissions des messages par les noeuds de la seconde liste s'arrêtent et reprennent au cycle suivant là où ils se sont interrompus dans la seconde liste. Dans ce document, tous les terminaux ne sont pas sûr de pouvoir s'exprimer au cours d'un cycle.

Plus particulièrement, l'objet de l'invention est défini par les revendications indépendantes suivantes. L'invention permet d'assurer à chaque noeud du réseau de pouvoir s'exprimer au moins une fois au cours d'un cycle.

D'autres caractéristiques et avantages de la présente invention ressortiront de la description des exemples de réalisation qui vont suivre, pris à titre d'exemples non limitatifs, en référence aux figures annexées dans lesquelles :
La figure 1 représente de façon très schématique un réseau de communication domestique de type bus Ethemet selon un exemple de réalisation de l'invention.
La figure 2 est un chronogramme illustrant le fonctionnement des noeuds du réseau pour mettre en oeuvre la méthode selon un exemple de réalisation de l'invention.

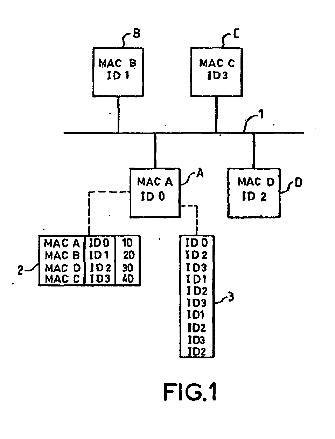

Le réseau de communication domestique de type bus Ethemet illustré sur la figure 1 comprend ici quatre noeuds de réseau représentés par les blocs A, B, C et D qui peuvent être des équipements de communication grand public comme un récepteur d'antenne parabolique, un décodeur numérique, un lecteur de disque optique et un téléviseur. Le bus Ethemet est indiqué par la référence 1. Il est généralement constitué par une paire de fils torsadés. Un tel réseau de communication domestique a généralement une bande passante de 100 Mb par seconde. Le bus Ethernet est un exemple, la présente invention concerne tout type de bus numérique comportant le passage d'un jeton entre des terminaux, le bus USB est un autre exemple.

Dans ce réseau de communication domestique, un arbitrage d'accès au bus Ethemet par l'intermédiaire d'un mécanisme de circulation d'un jeton est superposé au protocole Ethemet pour permettre la transmission sur le réseau de flux de données, par exemple des flux audio et/ou vidéo DVB. La circulation du jeton entre les noeuds A, B, C et D du réseau permet aux différents noeuds du réseau d'accéder en écriture au bus Ethemet 1 à tour de rôle sans risque de collision. Quand il possède le jeton, un noeud envoie sur le bus 1 à un noeud destinataire un et un seul paquet Ethemet (couche 2 - modèle OSI) dont la charge utile maximale est de 1500 octets, plus éventuellement des paquets de contrôle (gestion du protocole).

Selon le présent exemple de réalisation de l'invention, les noeuds du réseau peuvent réserver chacun une fraction de la bande passante du bus. Dans l'exemple illustré sur la figure 1, le noeud A a réservé 10 Mb par seconde, le noeud B a réservé 20 Mb par seconde, le noeud D a réservé 30 Mb par seconde et le noeud C a réservé 40 Mb par seconde. Les informations indicatives de la fraction de bande passante réservée par chaque noeud sont collectées par un noeud maître du réseau, ici le noeud A, et sont stockées dans une table 1 en correspondance avec les adresses physiques réseau des noeuds. Les adresses physiques des noeuds du réseau A, B, C et D sont représentées respectivement par MACA, MACB, MACC, MACD et les adresses logiques réseau des noeuds sont représentées respectivement par ID0, ID1, ID2, ID3. Ces adresses logiques sont utilisées dans les messages réseau pour la circulation du jeton.

Sur la base de la table 1, le noeud maître A construit dans une table 3 sous la forme d'une liste, une séquence définissant l'ordre chronologique de passage du jeton entre tous les noeuds de telle manière que la fraction prédéterminée de la bande passante réservée pour chaque noeud du réseau au cours d'un cycle corresponde dans la séquence à un certain nombre d'occurrences de passage du jeton par le noeud considéré.

La séquence définissant l'ordre chronologique de passage du jeton peut être construite par le noeud maître A en utilisant un calcul de plus grand commun diviseur entre les fractions de bande passante réservées. Dans l'exemple de la figure 1, la bande passante totale disponible est de 100 Mb par seconde. Le plus grand commun diviseur est 10 Mb par seconde. Sur cette base, la séquence définissant l'ordre chronologique de passage du jeton comportera 1 occurrence de passage pour le noeud A, 2 occurrences de passage pour le noeud B, 3 occurrences de passage pour le noeud D et 4 occurrences de passage pour le noeud C. Ces occurrences de passage sont symbolisées dans la table 3 par les adresses logiques ID0, ID1, ID2 et ID3 des noeuds.

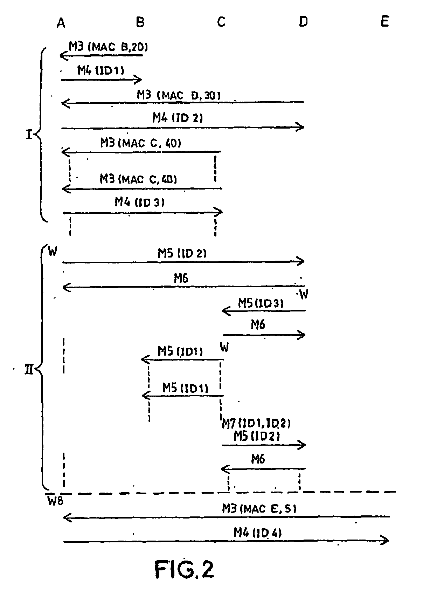

Par ailleurs, les occurrences de passage du jeton par un noeud du réseau peuvent avantageusement être réparties de façon équitable dans la séquence parmi les occurrences de passage du jeton par les autres noeuds du réseau, par exemple en utilisant l'algorithme de Bellman, comme illustrée dans la table 3 sur la figure 1. Cette répartition permet d'éviter les phénomènes de gigue.
Le fonctionnement des noeuds du réseau pour mettre en oeuvre la méthode selon un exemple de réalisation de l'invention est maintenant décrit en référence avec la figure 2.

### Initialisation du bus Ethernet et élection du noeud maître

A l'initialisation du bus Ethernet, un ou plusieurs noeuds du réseau doivent être configurés comme noeuds maître du réseau. Sur réception d'un message réseau d'initialisation envoyé depuis l'un des noeuds du réseau, chaque noeud configuré en noeud maître envoie sur le bus Ethemet 1 un premier message réseau contenant l'adresse physique du noeud. Ces premiers messages réseau sont envoyés sur le bus 1 depuis chaque noeud avec un retard aléatoire borné. A l'expiration du délai maximal de transmission du premier message réseau, le noeud configuré en noeud maître qui a la plus grande adresse physique se détermine de façon implicite comme noeud maître du réseau. Dans l'exemple de la figure 2, le noeud maître du réseau est le noeud A dont l'adresse physique est représentée par MACA

### Avis d'élection du noeud maître sur le réseau et numérotation logique des autres noeuds du réseau

Le noeud maître du réseau envoie sur le bus 1 un second message réseau pour annoncer aux autres noeuds du réseau qu'il est le noeud maître et qu'il a une adresse logique, ici représentée par ID0.

Quand le second message réseau est reçu par tous les autres noeuds du réseau, chaque autre noeud du réseau renvoie sur le bus 1 un troisième message réseau M3 contenant l'adresse physique du noeud, par exemple MACB pour le noeud B, et de façon facultative, une information indicative de la fraction de bande passante réservée par le noeud, par exemple 20 Mb par seconde pour le noeud B. Afin d'éviter les collisions de messages réseau Ethernet sur le bus 1, l'intervalle de temps entre l'instant de réception du second message réseau dans un noeud et l'instant d'envoi du troisième message réseau M3 est un délai aléatoire borné de valeur maximale T1. Si un noeud du réseau ne reçoit pas un quatrième message M4 du noeud maître avant le délai T1 décompté depuis l'instant de réception du second message réseau, il renvoie de nouveau immédiatement un troisième message réseau M3 sur le bus comme illustré sur la figure 2 pour le noeud C.

En réponse à la réception d'un troisième message réseau M3, le noeud maître A renvoie au noeud émetteur, par exemple le noeud B, le quatrième message réseau M4 comportant l'adresse logique affectée au noeud, par exemple ID1 pour le noeud B. Le noeud maître incrémente les adresses logiques affectées aux noeuds du réseau au fur et à mesure qu'il reçoit les troisièmes messages réseau M3.

Ce processus de numérotation des noeuds du réseau par échange des troisièmes et quatrièmes messages réseau M3, M4 est représenté par la partie 1 du chronogramme. En même temps que les quatrièmes messages réseau M4 sont envoyés sur le bus 1, le noeud maître A construit la table d'association 1 contenant pour chaque noeud du réseau, les adresses physique MACA, MACB, MACC, MACD et logique ID0, ID1, ID2, ID3 du noeud et l'information indicative de la fraction de bande passante réservée par le noeud.

Après un délai équivalent à 2 fois le délai T1, décompté depuis l'instant d'envoi du second message réseau, le noeud maître A construit la table 3 contenant la séquence définissant l'ordre chronologique de circulation du jeton entre les noeuds du réseau comme indiquée plus haut et la transmet à chaque noeud du réseau.

Après un délai équivalent à 3 fois le délai T1, décompté depuis l'instant d'envoi du second message réseau, les noeuds du réseau sont prêts à démarrer le mécanisme de circulation du jeton illustré par la partie II du chronogramme sur la figure 2. Ce délai T1 est un paramètre qui doit être réglé à l'initialisation du réseau en fonction du nombre de noeuds connectés au bus 1 afin d'optimiser le temps nécessaire à l'initialisation du réseau.

Chaque noeud qui détient le jeton peut écrire une fois sur le bus 1 un paquet Ethernet, puis transfert le jeton à un noeud suivant et ainsi de suite selon l'ordre chronologique défini dans la table 3. Pour contrôler la circulation du jeton de noeud en noeud, des cinquième M5 et sixième message réseau M6 sont échangés entre les noeuds du réseau. Dans le mécanisme de circulation du jeton selon un exemple de réalisation de l'invention, le noeud maître A d'adresse logique ID0, possède toujours en premier le jeton et peut écrire sur le bus 1 comme symbolisé par la référence W sur la figure 2. Il envoie ensuite le jeton au noeud suivant dans la séquence, qui est le noeud D d'adresse logique ID2 par l'intermédiaire d'un cinquième message réseau M5. Le cinquième message M5 est un message de diffusion Ethemet reçu par tous les noeuds du réseau pour leur permettre de suivent en parallèle la circulation du jeton dans leur table 3. Sur réception du cinquième message réseau, le noeud D renvoie sur le bus 1 le sixième message réseau à titre d'accusé réception pour le noeud A. Ce processus continue ainsi de noeud en noeud selon l'ordre chronologique défini dans la table 3.

Maintenant, si après un délai T2 décompté depuis l'instant d'envoi du cinquième message réseau M5 depuis un noeud du réseau, aucun sixième message M6 n'est envoyé sur le bus, le noeud en question renvoie de nouveau le sixième message réseau M6 comme illustré pour le noeud C sur la figure 2. Si aucun sixième message réseau M6 n'est envoyé sur le bus 1 dans le délai T2 comme indiqué ci-dessus, le noeud courant possédant le jeton, par exemple le noeud C sur la figure 2, envoie sur le bus 1 un septième message réseau M7 indiquant que le noeud suivant dans la séquence n'est plus disponible, dans l'exemple le noeud B d'adresse logique ID1, et contenant l'adresse logique du nouveau noeud suivant dans la séquence, ici le noeud D d'adresse logique ID2. En réponse à la réception du septième message réseau M7, les autres noeuds du réseau mettent à jour la table 3 en supprimant les occurrences de passage du jeton par le noeud défaillant, dans l'exemple les occurrences symbolisées par ID1. Le noeud courant possédant le jeton envoie ensuite un cinquième message réseau M5 contenant l'adresse logique du nouveau noeuds suivant pour poursuivre le mécanisme de circulation du jeton.

Dans le cas où le noeud défaillant serait le noeud maître, le noeud courant envoie sur le bus un message d'initialisation du réseau qui déclenche l'élection d'un nouveau noeud maître et la construction d'une nouvelle table 3 selon le même principe illustré par la partie 1 du chronogramme.

Après avoir envoyé ses données, et avant de passer le jeton, un noeud peut envoyer au noeud maître un message M3 pour changer sa réservation de bande passante. Le noeud maître renvoie un message M9 indiquant soit le succès de la réservation soit son échec (si par exemple il ne reste plus assez de bande passante disponible). Si la réservation est acceptée, le noeud maître modifie sa liste 2. Au prochain passage du cycle par le noeud maître, ce dernier mettra à jour la liste 3 et la diffusera sur le réseau avant de recommencer un cycle. Il est à noter qu'un certain pourcentage de la bande passante doit être gardé en réserve en tant que marge de sécurité afin de s'assurer que l'algorithme de calcul de la liste pour le passage du jeton s'exécute correctement, compte tenu des approximations faites pour faire correspondre la réservation de bande passante et le nombre d'occurrences du jeton. A titre d'exemple, ce pourcentage peut être de l'ordre de 10%.

Lorsque le jeton revient sur la première occurrence du noeud maître dans la table 3, le noeud maître A recommence le cycle illustré par la partie Il du chronogramme.

Il est possible de prévoir que le noeud maître A, avant de recommencer le cycle illustré par la partie II du chronogramme, déroule de façon cyclique un processus de mise à jour des tables 2 et 3 pour tenir compte des changements de configuration du réseau, notamment le branchement de nouveaux périphériques. Ce processus de mise à jour peut être réalisé avec une période T3 très supérieure aux délais T1 et T2. Selon ce processus de mise à jour, le noeud maître A envoie sur le bus un huitième message réseau M8 permettant aux nouveaux appareils connectés au bus de s'identifier comme un nouveau noeud du réseau tel que symbolisé par la référence E sur la figure 2. Dans le délai T2 décompté depuis l'instant d'envoi du huitième message réseau M8, le noeud maître A reste donc en attente de la réception d'un ou plusieurs troisièmes messages réseau M3. Sur la figure 2, on a représenté à titre d'exemple l'échange d'un troisième message réseau M3 et d'un quatrième message réseau M4 entre le noeud maître A et le nouveau noeud C. A chaque réception d'un message M3, le compteur de temps est réinitialisé. A l'issue du délai T2, le noeud maître reconstruit, en cas de changement, une nouvelle table 3 et la diffuse sur le bus 1.

En pratique, pour un bon fonctionnement du mécanisme de circulation du jeton, le délai T1 est réglé pour être supérieur au délai T2 et inférieur au délai T3. A titre d'exemple, T1 peut être réglé à 100 ms, T2 à 5ms et T3 à 3 mn.

Avec ce mécanisme de circulation d'un jeton, il est possible de garantir à chaque noeud du réseau l'utilisation d'une certaine fraction de la bande passante disponible sur le bus pour la transmission de flux de données.

Ce mécanisme de circulation d'un jeton peut être mis en oeuvre de façon simple dans les noeuds du réseau par configuration logicielle.

## Revendications

1. Méthode pour réserver à au moins un noeud d'un réseau de communication de type bus Ethernet, une fraction prédéterminée de la bande passante du bus numérique au cours d'un cycle; ladite méthode consistant à :
- faire circuler un jeton entre tous les noeuds du réseau (A,B,C,D) de telle manière à permettre à tous les noeuds du réseau d'envoyer à tour de rôle un seul paquet de données sur le bus (1) selon une séquence préétablie définissant un ordre chronologique de passage du jeton entre tous les noeuds au cours d'un cycle, ladite séquence étant définie par un noeud maître du réseau;
dans laquelle la fraction prédéterminée de la bande passante réservée pour un noeud du réseau correspond dans la séquence à un certain nombre d'occurrences de passage du jeton par le noeud considéré,
dans laquelle les occurrences de passage du jeton par un noeud du réseau sont réparties dans la séquence parmi les occurrences de passage du jeton par les autres noeuds du réseau pour éviter les phénomènes de gigue,
dans laquelle le noeud maître construit et transmet à chaque noeud une seconde table (3) dans laquelle est stockée la séquence définissant l'ordre de passage du jeton entre les noeuds du réseau,
et dans laquelle chaque noeud transmet le jeton au noeud suivant de la séquence de manière diffusée afin que chaque noeud du réseau puisse suivre la circulation du jeton.

2. Méthode selon la revendication 1, dans laquelle le noeud maître construit à l'initialisation du réseau une première table (2) dans laquelle est stockée pour chaque noeud du réseau une information indicative de la fraction de bande passante réservée pour le noeud du réseau et sur la base de la première table, le noeud maître construit ladite seconde table (3).

3. Réseau de communication domestique de type bus Ethernet comprenant des noeuds de réseau configurés pour mettre en oeuvre une méthode selon l'une des revendications 1 à 2.

4. Equipement de communication destiné à être connecté, en tant que noeud maître, à un réseau de communication d'un bus numérique de type bus Ethernet, et à réserver à au moins un noeud du réseau de communication une fraction prédéterminée de la bande passante du bus numérique, **caractérisé en ce qu'**il est configuré pour faire circuler un jeton entre tous les noeuds du réseau au cours d'un cycle et **en ce qu'**il est agencé pour construire une première table (2) dans laquelle est stockée pour chaque noeud du réseau une information indicative d'une fraction de la bande passante du bus réservée pour le noeud du réseau et une seconde table (3) dans laquelle est stockée une séquence définissant un ordre chronologique de passage du jeton entre tous les noeuds au cours d'un cycle, la fraction de la bande passante réservée pour un noeud du réseau correspond dans la séquence à un certain nombre d'occurrences de passage du jeton par le noeud considéré pour éviter les phénomènes de gigue, ladite seconde table étant transmise à tous les noeuds du réseau.

5. Equipement de communication destiné à être connecté à un réseau de communication d'un bus numérique de type bus Ethernet, et à envoyer un paquet de données sur le bus, **caractérisé en ce qu'**il est configuré pour :
- recevoir une table d'un noeud maître du réseau dans laquelle est stockée une séquence préétablie définissant un ordre chronologique de passage du jeton entre tous les noeuds au cours d'un cycle, la fraction de la bande passante réservée pour un noeud du réseau correspond dans la séquence à un certain nombre d'occurrences de passage du jeton par le noeud considéré pour éviter les phénomènes de gigue, ladite séquence étant définie par le noeud maître ;
- recevoir un jeton pour émettre un paquet ; et
- transmettre ledit jeton au noeud suivant de la séquence de manière diffusée afin que chaque noeud du réseau puisse suivre la circulation du jeton.

## Claims

1. Method for reserving, on at least one node of an Ethernet bus type communication network, a predetermined fraction of the bandwidth of the digital bus during a cycle; wherein it consists in:
- having a token circulate between all the nodes of the network (A, B, C, D) so as to enable all the nodes of the network to send in turn a data packet over the bus (1) according to a predefined sequence defining a chronological order of passage of the token between all the nodes during a cycle, said sequence being defined by a master node of the network; and
in which the predetermined fraction of the bandwidth reserved for a node of the network corresponds in the sequence to a certain number of occurrences of passage of the token via the node concerned,
in which the occurrences of passage of the token via a node of the network are distributed in the sequence among the occurrences of passage of the token via the other nodes of the network to avoid jitter effects,
in which the master node constructs and transmits to each node a second table (3) storing the sequence defining the order of passage of the token between the nodes of the network,
and in which each node transmits the token to the next node in the sequence in a broadcast manner so that each node of the network can follow the token circulation mechanism.

2. Method according to claim 1, in which the master node, on initialization of the network, constructs a first table (2) storing, for each node of the network, information indicative of the fraction of bandwidth reserved for the node of the network and, on the basis of the first table, the master node constructs said second table.

3. Domestic communication network of the Ethernet type comprising network nodes configured to implement a method according to one the claims 1 to 2.

4. Communication device designed to be connected, as a master node, to a digital bus communication network of the Ethernet type, and to reserve on at least one node of the communication network a predetermined fraction of the bandwidth of the digital bus, wherein it is configured to have a token circulate between all the nodes of the network during a cycle and in that it is organized to construct a first table (2) storing, for each node of the network, information indicative of a fraction of the bus bandwidth reserved for the node of the network and a second table (3) storing a sequence defining a chronological order of passage of the token between all the nodes during a cycle, the fraction of the bandwidth reserved for a node of the network corresponding in the sequence to a certain number to avoid jitter effects, said second table being transmitted to all the nodes of the network.

5. Communication device designed to be connected to a digital bus communication network of the Ethernet type, and to transmit a data packet to the bus, wherein it is configured for:
- receiving a table from a master node of the network storing a predefined sequence defining a chronological order of passage of the token between all the nodes during a cycle, the fraction of the bandwidth reserved for a node of the network corresponds in the sequence to a certain number of occurrences of passage of the token via the node concerned to avoid jitter effects, said sequence being defined by the master node;
- receiving a token for transmitting a packet; and
- transmit said token to the next node in the sequence in a broadcast manner so that each node of the network can follow the token circulation mechanism.

## Patentansprüche

1. Verfahren, um für mindestens einen Knoten eines Kommunikationsnetzwerks von der Art eines Ethernet-Busses einen vorbestimmten Anteil der Bandbreite des digitalen Busses während eines Zyklus zu reservieren, wobei das Verfahren darin besteht,
- einen Token alle Netzwerkknoten (A, B, C, D) derart durchlaufen zu lassen, dass es allen Knoten des Netzwerkes ermöglicht wird, dem Bus (1) der Reihe nach ein einziges Datenpaket gemäß einer vorbestimmten Sequenz zuzuführen, die eine chronologische Reihenfolge festlegt, in der der Token alle Knoten während eines Zyklus durchläuft, wobei die Sequenz durch einen Master-Knoten des Netzwerks festgelegt wird;
- bei dem der vorbestimmte Anteil der für einen Netzwerkknoten reservierten Bandbreite in der Sequenz einer gewissen Anzahl von Durchgängen des Tokens durch den betreffenden Knoten entspricht,
- bei dem die Durchgänge des Tokens durch einen Netzwerkknoten in der Sequenz unter den Durchgängen des Tokens durch die anderen Netzwerkknoten aufgeteilt sind, um Jitter-Erscheinungen zu vermeiden,
- bei dem der Master-Knoten eine zweite Tabelle (3) erstellt und an jeden Knoten übermittelt, in der die Sequenz gespeichert ist, welche die Reihenfolge festlegt, in welcher der Token alle Netzwerkknoten durchläuft, und
- bei dem jeder Knoten den Token an den nachfolgenden Knoten der Sequenz im Broadcastmodus überträgt, damit jeder Netzwerkknoten den Durchlauf des Tokens verfolgen kann.

2. Verfahren nach Anspruch 1, bei dem der Master-Knoten bei der Netzwerkinitialisierung eine erste Tabelle (2) erstellt, in der für jeden Netzwerkknoten eine Information gespeichert ist, die den Anteil der für den Netzwerkknoten reservierten Bandbreite angibt, und der Master-Knoten aufgrund der ersten Tabelle die zweite Tabelle (3) erstellt.

3. Kommunikationshausnetzwerk von der Art eines Ethernet-Busses mit Netzwerkknoten, die konfiguriert sind, um ein Verfahren nach einem der Ansprüche 1 bis 2 umzusetzen.

4. Kommunikationsvorrichtung, die dazu bestimmt ist, als Master-Knoten an ein Kommunikationsnetzwerk eines digitalen Busses von der Art eines Ethernet-Busses angeschlossen zu werden, und für mindestens einen Knoten des Kommunikationsnetzwerks einen vorbestimmten Anteil der Bandbreite des digitalen Busses zu reservieren, **dadurch gekennzeichnet, dass** sie konfiguriert ist, um einen Token alle Netzwerkknoten während eines Zyklus durchlaufen zu lassen, und dass sie derart eingerichtet ist, um eine erste Tabelle (2), in der für jeden Netzwerkknoten eine Information gespeichert ist, die einen Anteil der für den Netzwerkknoten reservierten Bus-Bandbreite angibt, und eine zweite Tabelle, in der eine Sequenz gespeichert ist, die eine Reihenfolge festlegt, in welcher der Token alle Knoten während eines Zyklus durchläuft, zu erstellen, wobei der Anteil der für einen Netzwerkknoten reservierten Bandbreite in der Sequenz einer gewissen Anzahl von Durchgängen des Tokens durch den betreffenden Knoten entspricht, um Jitter-Erscheinungen zu vermeiden, wobei die zweite Tabelle an alle Netzwerkknoten übermittelt wird.

5. Kommunikationsvorrichtung, die dazu bestimmt ist, an ein Kommunikationsnetzwerk eines digitalen Busses von der Art eines Ethernet-Busses angeschlossen zu werden und dem Bus ein Datenpaket zuzuführen, **dadurch gekennzeichnet, dass** sie derart konfiguriert ist, um
- von einem Master-Knoten des Netzwerks eine Tabelle zu empfangen, in der eine vorbestimmte Sequenz gespeichert ist, die eine chronologische Reihenfolge festlegt, in welcher der Token alle Knoten während eines Zyklus durchläuft, wobei der Anteil der für einen Netzwerkknoten reservierten Bandbreite in der Sequenz einer gewissen Anzahl von Durchgängen des Tokens durch den betreffenden Knoten entspricht, um Jitter-Erscheinungen zu vermeiden, wobei die Sequenz durch den Master-Knoten festgelegt wird;
- einen Token zu empfangen, um ein Paket auszusenden, und den Token an den nachfolgenden Knoten der Sequenz im Broadcastmodus zu übertragen, damit jeder Netzwerkknoten den Durchlauf des Tokens verfolgen kann.
